# EUROPÄISCHE PATENTSCHRIFT

(11) **EP 3 768 562 B1**
(45) Veröffentlichungstag und Bekanntmachung des Hinweises auf die Patenterteilung: **26.05.2021**
(21) Anmeldenummer: 19714565.9
(22) Anmeldetag: 20.03.2019
(51) Int. Cl.: B60T 15/18, B60T 15/02

(54) **RELAISVENTIL EINER DRUCKLUFTANLAGE**
RELAY VALVE FOR A COMPRESSED AIR SYSTEM
SOUPAPE À RELAIS D'UN SYSTEME À AIR COMPRIMÉ

(30) Priorität: 23.03.2018 DE 102018106975
(43) Veröffentlichungstag der Anmeldung: 27.01.2021
(73) Patentinhaber: ZF CV Systems Hannover GmbH, 30453 Hannover (DE)
(72) Erfinder: RIEDIGER-JANISCH, Karl-Heinz, 30455 Hannover (DE); HÖLSCHER, Reiner, 30926 Seelze (DE); MARTINI, Gerhard, 30989 Gehrden (DE)
(74) Vertreter: Rabe, Dirk-Heinrich
(86) Internationale Anmeldenummer: PCT/EP2019/056949
(87) Internationale Veröffentlichungsnummer: WO 2019/180075

(56) Entgegenhaltungen:
- DE-A1- 3 931 761
- DE-A1-102006 017 503

## Beschreibung

Die Erfindung betrifft ein Relaisventil einer Druckluftanlage eines Fahrzeugs, welches einen Arbeitsdruckeingang, einen Arbeitsdruckausgang, einen Entlüftungsausgang sowie einen steuerbaren Relaiskolben aufweist, wobei der Relaiskolben in einem Gehäuseoberteil axialbeweglich geführt ist und an einem axialen Ende einen ringförmigen, radial inneren Ventilsitz aufweist, wobei ein Dichtkolben vorhanden ist, der koaxial zu dem Relaiskolben in einem Gehäuseunterteil axialbeweglich geführt ist, wobei der Dichtkolben von einer Druckfeder in Richtung zum Relaiskolben und zu einem ringförmigen, radial äußeren Ventilsitz gedrückt wird, und bei dem der radial äußere Ventilsitz ein Bestandteil eines in einem Ringbund des Gehäuseunterteils befestigten Sitzringes ist.

Straßenfahrzeuge, insbesondere schwere Nutzfahrzeuge und Schienenfahrzeuge, sind üblicherweise mit einer Druckluftversorgungsanlage ausgerüstet, von der Druckluft-Verbraucherkreise, wie Betriebsbremskreise, ein Feststellbremskreis, ein Luftfederungskreis, ein Niveauregelungskreis und/oder Nebenverbraucherkreise mit Druckluft versorgt werden. Um den Arbeitsdruck von Druckluftverbrauchern, beispielsweise von Radbremszylindern eines Betriebsbremskreises, mit relativ geringer Steuerungsenergie zu modulieren, werden üblicherweise Relaisventile verwendet. Ein Relaisventil weist einen an eine Druckluftquelle angeschlossenen Arbeitsdruckeingang, einen Arbeitsdruckausgang, an den mindestens ein Druckluftverbraucher angeschlossenen ist, und einen in die Umgebung führenden Entlüftungsausgang auf.

In der vorliegend betrachteten Bauart ist das Relaisventil mit einem steuerbaren Relaiskolben und einem Dichtkolben versehen. Der Relaiskolben ist in einem Gehäuseoberteil axialbeweglich geführt und weist einen ringförmigen, radial inneren Ventilsitz auf. Der Dichtkolben ist koaxial zu dem Relaiskolben axialbeweglich in einem Gehäuseunterteil geführt und wird von einer Druckfeder in Richtung des Relaiskolbens sowie eines ringförmigen, radial äußeren Ventilsitzes gedrückt. Der radial äußere Ventilsitz ist ein Bestandteil eines Sitzrings, der abgedichtet in einem Ringbund des Gehäuseunterteils befestigt ist. Abhängig von der Lage des Relaiskolbens und des Dichtkolbens wird der Arbeitsdruckausgang wechselweise mit dem Arbeitsdruckeingang oder dem Entlüftungsausgang verbunden oder gegenüber diesen abgesperrt. Wenn der Relaiskolben mit dem inneren Ventilsitz an dem Dichtkolben anliegt, und der Dichtkolben von dem äußeren Ventilsitz abgehoben hat, ist der Arbeitsdruckausgang mit dem Arbeitsdruckeingang verbunden, wodurch der an dem Druckluftverbraucher wirksame Arbeitsdruck erhöht wird. Wenn der Relaiskolben mit seinem inneren Ventilsitz von dem Dichtkolben abgehoben hat, und der Dichtkolben an dem äußeren Ventilsitz anliegt, ist der Arbeitsdruckausgang mit dem Entlüftungsausgang verbunden, wodurch der an dem Druckluftverbraucher wirksame Arbeitsdruck abgesenkt wird. Sofern der Relaiskolben mit seinem inneren Ventilsitz an dem Dichtkolben anliegt, und der Dichtkolben zugleich an dem äußeren Ventilsitz anliegt, ist der Arbeitsdruckausgang gegenüber dem Arbeitsdruckeingang und dem Entlüftungsausgang abgesperrt, so dass der an dem Druckluftverbraucher wirksame Arbeitsdruck dann konstant gehalten wird.

Aus der DE 39 31 761 A1 und der DE 10 2006 017 503 A1 sind derartige Relaisventile bekannt, bei dem der Relaiskolben pneumatisch verstellbar ist, indem ein von diesem begrenzter Steuerdruckraum über mindestens ein Magnetsteuerventil wechselweise mit einem hohen Steuerdruck beaufschlagt oder entlüftet werden kann.

Aus der DE 10 2014 016 771 A1 ist ein weiteres derartiges Relaisventil bekannt, bei dem der Relaiskolben elektromagnetisch verstellbar ist, indem ein Elektromagnet, der koaxial zu dem Relaiskolben angeordnet ist, und dessen Anker mit dem Relaiskolben verbunden ist, mit einem hinsichtlich seiner Höhe und Polung variablen Steuerstrom beaufschlagt werden kann.

Beiden vorgenannten Relaisventilen ist gemeinsam, dass der radial äußere Ventilsitz für den Dichtkolben ein Bestandteil eines Sitzrings ist, der als ein vorzugsweise aus Aluminium bestehendes Drehteil ausgeführt ist, und der abgedichtet durch einen O-Ring in einen Ringbund des Gehäuseunterteils eingesetzt sowie dort mittels eines in eine Ringnut eingesetzten Sicherungsrings axial fixiert ist.

Da die Anfertigung des Sitzrings mit dem radial äußeren Ventilsitz als Drehteil sowie dessen Fixierung in dem Ringbund des Gehäuseunterteils mittels eines Sicherungsrings relativ aufwendig ist, liegt der vorliegenden Erfindung die Aufgabe zu Grunde, einen mit dem radial äußeren Ventilsitz des Dichtungskolbens versehenen Sitzring vorzuschlagen, der einfacher und kostengünstiger herstellbar sowie montierbar ist.

Diese Aufgabe ist durch ein Relaisventil mit den Merkmalen des Anspruchs 1 gelöst. Vorteilhafte Ausgestaltungen und Weiterbildungen sind Gegenstand der abhängigen Ansprüche.

Die Erfindung geht demnach aus von einem Relaisventil einer Druckluftanlage eines Fahrzeugs, welches einen Arbeitsdruckeingang, einen Arbeitsdruckausgang, einen Entlüftungsausgang sowie einen steuerbaren Relaiskolben aufweist, wobei der Relaiskolben in einem Gehäuseoberteil axialbeweglich geführt ist und an einem axialen Ende einen ringförmigen, radial inneren Ventilsitz aufweist, wobei ein Dichtkolben vorhanden ist, der koaxial zu dem Relaiskolben in einem Gehäuseunterteil axialbeweglich geführt ist, wobei der Dichtkolben von einer Druckfeder in Richtung zum Relaiskolben und zu einem ringförmigen, radial äußeren Ventilsitz gedrückt wird, und bei dem der radial äußere Ventilsitz ein Bestandteil eines in einem Ringbund des Gehäuseunterteils befestigten Sitzringes ist. Zur Lösung der gestellten Aufgabe ist bei diesem Relaisventil vorgesehen, dass der Sitzring ein topfzylindrisches Tiefziehbauteil aus einem metallischen Werkstoff ist, und dass der radial äußere Ventilsitz für den Dichtkolben als ein axial hervorstehender Ringsteg mit einem giebelförmigen axialen Querschnitt ausgebildet ist

Der Sitzring ist vorzugsweise aus einem Stahlblech oder aus einem Aluminiumblech gefertigt. Um eine ausreichende Formstabilität wie auch eine gewisse Federelastizität zu erreichen, liegt die Wandstärke des Sitzrings im Bereich von 0,5 mm bis 0,8 mm, einschließlich der Bereichsgrenzen.

Der erfindungsgemäße Sitzring kann zu seiner axialen Positionierung einen radial außen ausgebildeten und axial hervorstehenden ringförmigen Anschlagsteg aufweisen, der im montierten Zustand an einem ringförmigen Anschlagbund innerhalb des Ringbundes des Gehäuseunterteils anliegt.

Der Anschlagsteg des Sitzrings ist bevorzugt als ein im Querschnitt giebelförmiger Ringsteg ausgebildet, der durch Prägen in den Sitzring eingearbeitet ist.

Zu seiner axialen Fixierung weist der Sitzring bevorzugt an seinem radialen Außenrand umfangsseitig verteilt angeordnete Federzungen auf, die im montierten Zustand hinter einen radial nach innen gerichteten Ringsteg greifen, der am axialen Außenrand des Ringbundes des Gehäuseunterteils ausgebildet ist. Hierdurch werden das Ausdrehen einer Sicherungsnut aus dem Gehäuseunterteil am Außenrand des Ringbundes und das Einsetzen eines Sicherungsrings in eine solche Sicherungsnut vermieden, wodurch die Montage des Sitzrings vereinfacht ist.

Die Federzungen können auf einfache Weise durch eine umfangsseitig verteilte Anordnung von axialen Trennschlitzen am Außenrand des Sitzrings gebildet sein, wobei die Trennschlitze beispielsweise durch Ausstanzen aus dem Sitzring erzeugt sind.

Um eine Abdichtung mittels eines Dichtrings zu vermeiden, kann der Sitzring zu seiner Abdichtung an seinem Außenumfang mindestens einen radial hervorstehenden ringförmigen Dichtungssteg aufweisen, der im montierten Zustand durch ein radiales Übermaß federelastisch an einer zylindrischen Dichtungsfläche des Gehäuseunterteils abdichtend anliegt. Der Dichtungssteg des Sitzrings ist bevorzugt als ein im Querschnitt giebelförmiger Ringsteg ausgebildet, der durch Prägen in den Sitzring eingearbeitet ist.

Die Erfindung wird nachstehend anhand von zwei in der beigefügten Zeichnung dargestellten Ausführungsbeispielen näher erläutert. In der Zeichnung zeigt
Fig. 1 ein erfindungsgemäßes Relaisventil mit einer ersten Ausführung eines Sitzrings in einem ausschnittweisen axialen Mittelschnitt,
Fig. 2 ein erfindungsgemäßes Relaisventil mit einer zweiten Ausführung eines Sitzrings in einem ausschnittweisen axialen Mittelschnitt, und
Fig. 3 ein bekanntes Relaisventil mit einer bislang üblichen Ausführung eines Sitzrings in einem ausschnittweisen axialen Mittelschnitt.

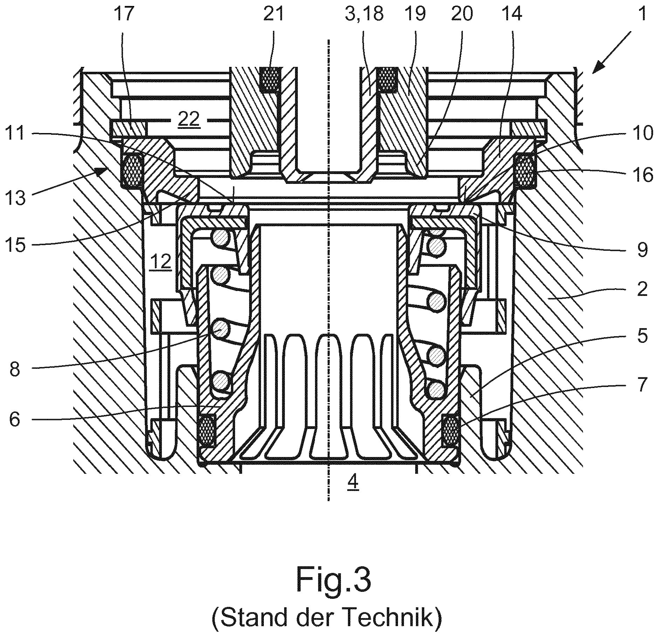

In Fig. 3 ist ein bislang übliches Relaisventil 1 für eine Druckluftanlage eines Fahrzeugs dargestellt. Der Aufbau des Relaisventils entspricht weitgehend demjenigen der aus der DE 10 2006 017 503 A1 und der DE 10 2014 016 771 A1 bekannten Relaisventile. Hinsichtlich des prinzipiellen Aufbaus und der Funktionsweise derartiger Relaisventile wird auch auf die DE 41 36 244 A1 verwiesen, in der dies ausführlich beschrieben ist. Die vorliegende Beschreibung ist daher auf die für die Erfindung relevanten Bauteile beschränkt.

Das Relaisventil 1 weist ein topfzylindrisches Gehäuseunterteil 2 und ein mit diesem verbundenes deckelartiges Gehäuseoberteil 3 auf. Das Gehäuseunterteil 2 hat eine zentrale Austrittsöffnung 4, die zu einem Entlüftungsausgang führt. Über der Austrittsöffnung 4 ist ein doppelzylindrischer Führungskörper 6, abgedichtet über einen ersten O-Ring 7, in eine topfzylindrische Aufnahme 5 des Gehäuseunterteils 2 eingesetzt. Auf das austrittöffnungsferne Ende des Führungskörpers 6 ist ein Dichtkolben 9 axialbeweglich aufgesetzt und geführt. Der Dichtkolben 9 ist von einer in den Führungskörper 6 eingesetzten, als Schraubenfeder ausgebildeten Druckfeder 8 in Richtung des Gehäuseoberteils 3 mit einer Federkraft belastet. Auf seiner dem Gehäuseoberteil 3 zugewandten Oberseite weist der Dichtkolben 9 radial außen eine ringscheibenförmige erste Dichtfläche 10 und radial innen eine ringscheibenförmige zweite Dichtfläche 11 auf. Koaxial um den Führungskörper 6 und den Dichtkolben 9 befindet sich ein Ringraum 12, der mit einem Arbeitsdruckeingang des Relaisventils in Verbindung steht.

Oberhalb des Dichtkolbens 9 ist ein Sitzring 14, abgedichtet über einen zweiten O-Ring 16 und axial fixiert mittels eines Sicherungsrings 17, in einen Ringbund 13 des Gehäuseunterteils 2 eingesetzt. Auf seiner dem Dichtkolben 9 zugewandten Unterseite weist der Sitzring 14 einen als axial hervorstehenden Ringsteg ausgebildeten äußeren Ventilsitz 15 auf, der mit der ersten, radial äußeren Dichtfläche 10 des Dichtkolbens 9 zusammenwirkt. Der Sitzring 14 ist als ein Drehteil aus Stahl oder Aluminium hergestellt.

Auf einem zentralen Führungszylinder 18 des Gehäuseoberteils 3 ist ein steuerbarer Relaiskolben 19 axialbeweglich geführt, der gegenüber dem Gehäuseoberteil 3 mittels eines dritten O-Rings 21 abgedichtet ist. Der Relaiskolben 19 ist elektromagnetisch oder pneumatisch betätigbar, also axial verschiebbar. Auf seiner dem Dichtkolben 9 zugewandten Unterseite weist der Relaiskolben 19 einen als axial hervorstehenden Ringsteg ausgebildeten radial inneren Ventilsitz 20 auf, der mit der zweiten, radial inneren Dichtfläche 11 des Dichtkolbens 9 zusammenwirkt. Zwischen dem Dichtkolben 9 und dem Relaiskolben 19 befindet sich ein Zentralraum 22, der mit einem Arbeitsdruckausgang in Verbindung steht.

Wenn der Relaiskolben 19 mit seinem Ventilsitz 20 an der zweiten, radial inneren Dichtfläche 11 des Dichtkolbens 9 anliegt und der Dichtkolben 9 mit seiner ersten, radial äußeren Dichtfläche 10 von dem Ventilsitz 15 des Sitzrings 14 abgehoben hat, ist der Arbeitsdruckausgang mit dem Arbeitsdruckeingang des Relaisventils 1 verbunden, wodurch der bei einem an den Arbeitsdruckausgang angeschlossene Druckluftverbraucher wirksame Arbeitsdruck erhöht wird. Sofern wie in Fig. 3 dargestellt der Relaiskolben 19 mit seinem Ventilsitz 20 von der zweiten, radial inneren Dichtfläche 11 des Dichtkolbens 9 abgehoben hat und der Dichtkolben 9 mit der ersten, radial äußeren Dichtfläche 10 an dem Ventilsitz 15 des Sitzrings 14 anliegt, ist der Arbeitsdruckausgang mit dem Entlüftungsausgang verbunden, wodurch der an dem Druckluftverbraucher wirksame Arbeitsdruck abgesenkt wird. Wenn der Relaiskolben 19 mit seinem Ventilsitz 20 an der zweiten, radial inneren Dichtfläche 11 des Dichtkolbens 9 anliegt und der Dichtkolben 9 zugleich mit der ersten, radial äußeren Dichtfläche 10 an dem äußeren Ventilsitz 15 des Sitzrings 14 anliegt, dann ist der Arbeitsdruckausgang gegenüber dem Arbeitsdruckeingang und dem Entlüftungsausgang abgesperrt, so dass der an dem Druckluftverbraucher wirksame Arbeitsdruck dann konstant gehalten wird.

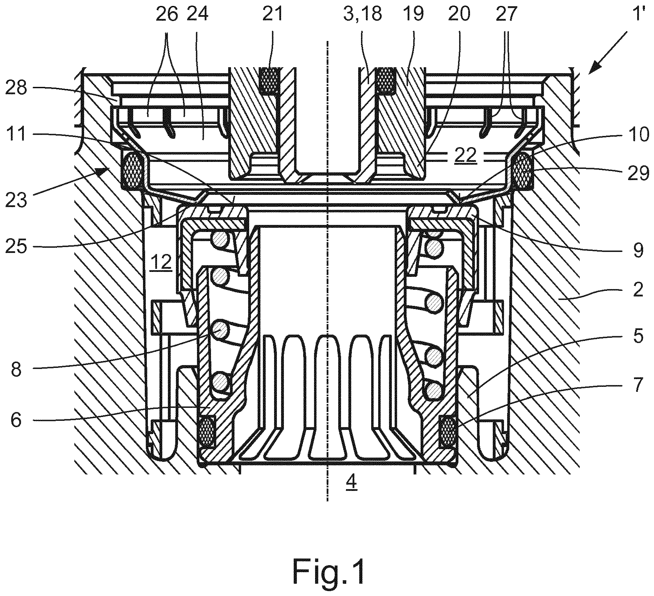

Eine in Fig. 1 abgebildete erste erfindungsgemäße Ausführung eines Relaisventils 1' unterscheidet sich von der bekannten Ausführung des Relaisventils 1 gemäß Fig. 3 bei gleicher Funktion dadurch, dass der Sitzring 24 nun als ein topfzylindrisches Tiefziehbauteil aus einem Stahlblech oder einem Aluminiumblech hergestellt ist. Der an dem Sitzring 24 ausgebildete Ventilsitz 25 für den Dichtkolben 9 ist als ein axial hervorstehender Ringsteg mit einem giebelförmigen Querschnitt ausgebildet, der durch Prägen in den Sitzring 24 eingearbeitet ist.

Der Sitzring 24 ist in einen Ringbund 23 des Gehäuseunterteils 2 eingesetzt. Zu seiner axialen Fixierung weist der Sitzring 24 an seinem radialen Außenrand umfangsseitig verteilt ausgebildete Federzungen 26 auf, die im montierten Zustand hinter einen radial nach innen gerichteten Ringsteg 28 greifen, der am axialen Außenrand des Ringbundes 23 ausgebildet ist. Die Federzungen 26 sind durch eine umfangsseitig verteilte Ausbildung von axialen Trennschlitzen 27 am Außenrand des Sitzrings 24 gebildet, die durch Ausstanzen aus dem Sitzring 24 erzeugt sind. Zur Abdichtung zwischen dem Sitzring 24 und dem Gehäuseunterteil 2 ist ein O-Ring 29 in den Ringbund 23 des Gehäuseunterteils 2 eingesetzt.

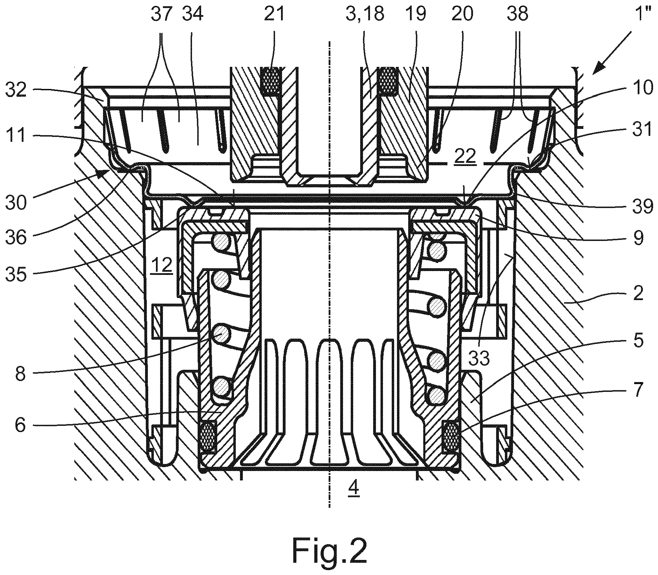

Eine in Fig. 2 abgebildete zweite erfindungsgemäße Ausführung eines Relaisventils 1" unterscheidet sich von der bekannten Ausführung des Relaisventils 1 gemäß Fig. 3 bei gleicher Funktion ebenfalls dadurch, dass der Sitzring 34 als ein topfzylindrisches Tiefziehbauteil aus einem Stahlblech oder einem Aluminiumblech hergestellt ist. Der radial äußere Ventilsitz 35 für den Dichtkolben 9 ist wiederum als ein axial hervorstehender Ringsteg mit einem giebelförmigen Querschnitt ausgebildet, der durch Prägen in den Sitzring 34 eingearbeitet ist.

Der Sitzring 34 ist in einen Ringbund 30 des Gehäuseunterteils 2 eingesetzt. Zu seiner axialen Positionierung weist der Sitzring 34 radial außen einen axial hervorstehenden ringförmigen Anschlagsteg 36 auf, der im montierten Zustand an einem ringförmigen Anschlagbund 31 am radialen Innenrand des Ringbundes 30 anliegt. Der Anschlagsteg 36 des Sitzrings 34 ist als ein im Querschnitt giebelförmiger Ringsteg ausgebildet, der durch Prägen in den Sitzring 34 eingearbeitet ist. Zu seiner axialen Fixierung weist der Sitzring 34 an seinem radialen Außenrand umfangsseitig verteilt angeordnete Federzungen 37 auf, die im montierten Zustand hinter einen radial nach innen gerichteten Ringsteg 32 greifen, der am axialen Außenrand des Ringbundes 30 ausgebildet ist. Die Federzungen 37 sind durch eine umfangsseitig verteilte Ausbildung von axialen Trennschlitzen 38 am Außenrand des Sitzrings 34 gebildet, die durch Ausstanzen aus dem Sitzring 34 erzeugt sind.

Zur Abdichtung zwischen dem Sitzring 34 und dem Gehäuseunterteil 2 weist der Sitzring 34 radial innen an seinem Außenumfang einen radial hervorstehenden ringförmigen Dichtungssteg 39 auf, der im montierten Zustand durch ein radiales Übermaß federelastisch an einer zylindrischen Dichtungsfläche 33 des Gehäuseunterteils 2 anliegt. Der Dichtungssteg 39 des Sitzrings 34 ist als ein im Querschnitt giebelförmiger Ringsteg ausgebildet, der durch Prägen in den Sitzring 34 eingearbeitet ist.

Durch die Ausführung als Tiefziehbauteil aus Blech gemäß den Figuren 1 und 2 ist die Herstellung des Sitzrings 24, 34 im Vergleich zu einer Ausführung des Sitzrings 14 als Drehteil gemäß Fig. 3 deutlich vereinfacht und entsprechend kostengünstiger. Durch die Fixierung des Sitzrings 24, 34 mittels jeweils hinter einen Ringsteg 28, 32 am Außenrand des Ringbundes 23, 30 greifende Federzungen 26, 37 gemäß den Figuren 1 und 2 ist auch die Montage des Sitzrings 24, 34 im Vergleich zu der Fixierung des Sitzrings 14 mittels eines in eine Ringnut eingesetzten Sicherungsrings 17 gemäß Fig. 3 vereinfacht. Durch die Ausführung des Sitzrings 34 mit einem Dichtungssteg 39 gemäß Fig. 2 wird gegenüber den anderen Ausführungen des Sitzrings 14, 24 gemäß den Figuren 1 und 3 auch ein O-Ring 16, 29 eingespart, wodurch die Montage des Relaisventils 1" weiter vereinfacht ist.

### Bezugszeichenliste

- 1, 1', 1": Relaisventil
- 2: Gehäuseunterteil
- 3: Gehäuseoberteil
- 4: Austrittsöffnung
- 5: Aufnahme am Gehäuseunterteil
- 6: Führungskörper
- 7: O-Ring
- 8: Druckfeder, Schraubenfeder
- 9: Dichtkolben
- 10: Erste Dichtfläche des Dichtkolbens
- 11: Zweite Dichtfläche des Dichtkolbens
- 12: Ringraum
- 13: Ringbund im Gehäuseunterteil
- 14: Sitzring
- 15: Äußerer Ventilsitz, Ringsteg
- 16: O-Ring
- 17: Sicherungsring
- 18: Führungszylinder
- 19: Relaiskolben
- 20: Innerer Ventilsitz am Relaiskolben
- 21: O-Ring
- 22: Zentralraum
- 23: Ringbund
- 24: Sitzring
- 25: Äußerer Ventilsitz, Ringsteg
- 26: Federzunge
- 27: Trennschlitz
- 28: Ringsteg
- 29: O-Ring
- 30: Ringbund
- 31: Anschlagbund
- 32: Ringsteg
- 33: Dichtungsfläche im Gehäuseunterteil
- 34: Sitzring
- 35: Äußerer Ventilsitz, Ringsteg
- 36: Anschlagsteg, Ringsteg
- 37: Federzunge
- 38: Trennschlitz
- 39: Dichtungssteg, Ringsteg

## Patentansprüche

1. Relaisventil (1', 1") einer Druckluftanlage eines Fahrzeugs, welches einen Arbeitsdruckeingang, einen Arbeitsdruckausgang, einen Entlüftungsausgang sowie einen steuerbaren Relaiskolben (19) aufweist, wobei der Relaiskolben (19) in einem Gehäuseoberteil (3) axialbeweglich geführt ist und an einem axialen Ende einen ringförmigen, radial inneren Ventilsitz (20) aufweist, wobei ein Dichtkolben (9) vorhanden ist, der koaxial zu dem Relaiskolben (19) in einem Gehäuseunterteil (2) axialbeweglich geführt ist, wobei der Dichtkolben (9) von einer Druckfeder (8) in Richtung zum Relaiskolben (19) und zu einem ringförmigen, radial äußeren Ventilsitz (25, 35) gedrückt wird, und bei dem der radial äußere Ventilsitz (25, 35) ein Bestandteil eines in einem Ringbund (23, 30) des Gehäuseunterteils (2) befestigten Sitzringes (24, 34) ist, **dadurch gekennzeichnet, dass** der Sitzring (24, 34) ein topfzylindrisches Tiefziehbauteil aus einem metallischen Werkstoff ist, und dass der äußere Ventilsitz (25, 35) für den Dichtkolben (9) als ein axial hervorstehender Ringsteg mit einem giebelförmigen axialen Querschnitt ausgebildet ist.

2. Relaisventil nach Anspruch 1, **dadurch gekennzeichnet, dass** der äußere Ventilsitz (25, 35) für den Dichtkolben (9) durch Prägen in den Sitzring (24, 34) eingearbeitet ist.

3. Relaisventil nach Anspruch 1 oder 2, **dadurch gekennzeichnet, dass** die Wandstärke des Sitzrings (24, 34) 0,5 mm bis 0,8 mm beträgt, einschließlich der Bereichsgrenzen.

4. Relaisventil nach einem der Ansprüche 1 bis 3, **dadurch gekennzeichnet, dass** der Sitzring (34) zu seiner axialen Positionierung radial außen einen axial hervorstehenden, ringförmigen Anschlagsteg (36) aufweist, der im montierten Zustand an einem ringförmigen Anschlagbund (31) innerhalb des Ringbundes (30) des Gehäuseunterteils (2) anliegt.

5. Relaisventil nach Anspruch 4, **dadurch gekennzeichnet, dass** der Anschlagsteg (36) des Sitzrings (34) als ein im Querschnitt giebelförmiger Ringsteg ausgebildet ist, der durch Prägen in den Sitzring (34) eingearbeitet ist.

6. Relaisventil nach einem der Ansprüche 1 bis 5, **dadurch gekennzeichnet, dass** der Sitzring (24, 34) zu seiner axialen Fixierung im Gehäuseunterteil (2) an seinem radialen Außenrand umfangsseitig verteilt angeordnete Federzungen (26, 37) aufweist, die im montierten Zustand hinter einen radial nach innen gerichteten Ringsteg (28, 32) greifen, der am axialen Außenrand des Ringbundes (23, 30) des Gehäuseunterteils (2) ausgebildet ist.

7. Relaisventil nach Anspruch 6, **dadurch gekennzeichnet, dass** die Federzungen (26, 37) durch eine umfangsseitig verteilte Anordnung von axialen Trennschlitzen (27, 38) am Außenrand des Sitzrings (24, 34) gebildet sind, und dass die Trennschlitze (27, 38) durch Ausstanzen aus dem Sitzring (24, 34) erzeugt sind.

8. Relaisventil nach einem der Ansprüche 1 bis 7, **dadurch gekennzeichnet, dass** der Sitzring (34) an seinem Außenumfang mindestens einen radial hervorstehenden ringförmigen Dichtungssteg (39) aufweist, der im montierten Zustand durch ein radiales Übermaß federelastisch an einer zylindrischen Dichtungsfläche (33) des Gehäuseunterteils (2) abdichtend anliegt.

9. Relaisventil nach Anspruch 8, **dadurch gekennzeichnet, dass** der Dichtungssteg (39) des Sitzrings (34) als ein im Querschnitt giebelförmiger Ringsteg ausgebildet ist, der durch Prägen in den Sitzring (34) eingearbeitet ist.

10. Relaisventil nach Anspruch 8 oder 9, **dadurch gekennzeichnet, dass** der Dichtungssteg (39) radial außen am dichtungskolbennahen axialen Ende des Sitzrings (34) ausgebildet ist.

## Claims

1. A relay valve (1', 1") for a compressed-air system of a vehicle, comprising a working pressure inlet, a venting outlet and a controllable relay piston (19), wherein the controllable relay piston (19) is axially movably guided in a housing top part (3) and, at one axial end, has an annular, radially inner valve seat (20), wherein a sealing piston (9) is axially movably guided in a housing bottom part (2) coaxially with respect to the controllable relay piston (19), wherein the sealing piston (9) is pushed by a compression spring (8) toward the controllable relay piston (19) and toward an annular, radially outer valve seat (25, 35), and in which the radially outer valve seat (25, 35) is a part of a seat ring (24, 34) fastened in an annular collar (23, 30) of the housing bottom part (2), **characterized in that** the seat ring (24, 34) is a deep-drawn component shaped as a cylindrical pot composed of a metallic material, and the radially outer valve seat (25, 35) for the sealing piston (9) is an axially protruding annular web with a gable-shaped axial cross section.

2. The relay valve according to claim 1, **characterized in that** the radially outer valve seat (25, 35) for the sealing piston (9) is embossed into the seat ring (24, 34).

3. The relay valve according to claim 1 or 2, **characterized in that** the wall thickness of the seat ring (24, 34) is within the range of 0.5 mm through 0.8 mm.

4. The relay valve according to any of claims 1 to 3, **characterized in that**, for its axial positioning, the seat ring (34) has at a radially outer periphery an axially protruding annular abutment web (36) which, in a fitted state, bears against an annular abutment collar (31) within the annular collar (30) of the housing bottom part (2).

5. The relay valve according to claim 4, **characterized in that** the abutment web (36) of the seat ring (34) is an annular web, which has a gable-shaped cross section and is embossed into the seat ring (34).

6. The relay valve according to any of claims 1 to 5, **characterized in that** for its axial fixing in the housing bottom part (2), the seat ring (24, 34) has its radially outer edge with spring tongues (26, 37) arranged in a circumferentially distributed manner, which, in a fitted state, reach behind a radially inwardly directed annular web (28, 32) formed at an axial outer edge of the annular collar (23, 30) of the housing bottom part (2).

7. The relay valve according to claim 6, **characterized in that** the spring tongues (26, 37) are formed by a circumferentially distributed arrangement of axial separating slots (27, 38) at the radially outer edge of the seat ring (24, 34), and **in that** the separating slots (27, 38) are punched out of the seat ring (24, 34).

8. The relay valve according to any of claims 1 to 7, **characterized in that** the seat ring (34) has its outer circumference with at least one radially protruding annular seal web (39) which, in a fitted state, by way of a radial oversize, bears resiliently elastically against a cylindrical sealing surface (33) of the housing bottom part (2) in a sealing manner.

9. The relay valve according to claim 8, **characterized in that** the seal web (39) of the seat ring (34) is an annular web which has a gable-shaped cross section and is embossed into the seat ring (34).

10. The relay valve according to claim 8 or 9, **characterized in that** the seal web (39) is formed at a radially outer periphery at an axial end of the seat ring (34) proximate to the sealing piston.

## Revendications

1. Soupape-relais (1', 1") d'une installation à air comprimé d'un véhicule, laquelle présente une entrée de pression de travail, une sortie de pression de travail, une sortie de désaération ainsi qu'un piston-relais (19) pouvant être commandé, dans laquelle le piston-relais (19) est guidé de façon mobile axialement dans une partie supérieure de carter (3) et présente à une extrémité axiale un siège de soupape radialement intérieur (20) annulaire, dans laquelle un piston d'étanchéité (9) est présent, qui est guidé de façon mobile axialement de manière coaxiale par rapport au piston-relais (19) dans une partie inférieure de carter (2), dans laquelle le piston d'étanchéité (9) est pressé par un ressort de compression (8) en direction du piston-relais (19) et vers un siège de soupape radialement extérieur (25, 35) annulaire, et pour laquelle le siège de soupape radialement extérieur (25, 35) fait partie d'une bague de siège (24, 34) fixée dans une collerette annulaire (23, 30) de la partie inférieure de carter (2), **caractérisée en ce que** la bague de siège (24, 34) est une pièce emboutie en forme de pot cylindrique composée d'un matériau métallique, et que le siège de soupape extérieur (25, 35) pour le piston d'étanchéité (9) est réalisé sous la forme d'une nervure annulaire faisant saillie axialement avec une section transversale axiale en forme de pignon.

2. Soupape-relais selon la revendication 1, **caractérisée en ce que** le siège de soupape extérieur (25, 35) pour le piston d'étanchéité (9) est ménagé dans la bague de siège (24, 34) par estampage.

3. Soupape-relais selon la revendication 1 ou 2, **caractérisée en ce que** l'épaisseur de paroi de la bague de siège (24, 34) atteint 0,5 mm à 0,8 mm, y compris les limites de plage.

4. Soupape-relais selon l'une quelconque des revendications 1 à 3, **caractérisée en ce que** la bague de siège (34) présente par rapport à son positionnement axial radialement à l'extérieur une nervure de butée (36) annulaire faisant saillie axialement, qui, dans l'état monté, s'applique contre une collerette de butée annulaire (31) à l'intérieur de la collerette annulaire (30) de la partie inférieure de carter (2) .

5. Soupape-relais selon la revendication 4, **caractérisée en ce que** la nervure de butée (36) de la bague de siège (34) est réalisée sous la forme d'une nervure annulaire en forme de pignon en section transversale, qui est ménagée dans la bague de siège (34) par estampage.

6. Soupape-relais selon l'une quelconque des revendications 1 à 5, **caractérisée en ce que** la bague de siège (24, 34) présente pour sa fixation axiale dans la partie inférieure de carter (2) sur son bord extérieur radial des languettes élastiques (26, 37) disposées de manière répartie côté périphérie, qui passent dans l'état monté derrière une nervure annulaire (28, 32) dirigée radialement vers l'intérieur, qui est réalisée sur le bord extérieur axial de la collerette annulaire (23, 30) de la partie inférieure de carter (2).

7. Soupape-relais selon la revendication 6, **caractérisée en ce que** les languettes élastiques (26, 37) sont formées par un ensemble réparti côté périphérie de fentes de séparation (27, 38) axiales sur le bord extérieur de la bague de siège (24, 34), et que les fentes de séparation (27, 38) sont produites par découpage à partir de la bague de siège (24, 34) .

8. Soupape-relais selon l'une quelconque des revendications 1 à 7, **caractérisée en ce que** la bague de siège (34) présente sur sa périphérie extérieure au moins une nervure d'étanchéité (39) annulaire faisant saillie radialement, qui, dans l'état monté, s'applique de façon étanche de manière élastique contre une surface d'étanchéité cylindrique (33) de la partie inférieure de carter (2) du fait d'un surdimensionnement radial.

9. Soupape-relais selon la revendication 8, **caractérisée en ce que** la nervure d'étanchéité (39) de la bague de siège (34) est réalisée sous la forme d'une nervure annulaire en forme de pignon en section transversale, qui est ménagée dans la bague de siège (34) par estampage.

10. Soupape-relais selon la revendication 8 ou 9, **caractérisée en ce que** la nervure d'étanchéité (39) est réalisée radialement à l'extérieur à l'extrémité axiale, proche du piston d'étanchéité, de la bague de siège (34).
